# EUROPEAN PATENT SPECIFICATION

(11) **EP 3 987 468 B1**
(45) Date of publication and mention of the grant of the patent: **24.04.2024**
(21) Application number: 20830949.2
(22) Date of filing: 24.06.2020
(51) Int. Cl.: G06Q 10/0631, G06Q 10/20, G06Q 20/18

(54) **PROVIDING SERVICE TO AUTOMATED BANKING MACHINES**
BEREITSTELLUNG EINES DIENSTES FÜR BANKAUTOMATEN
FOURNITURE D'UN SERVICE À DES GUICHETS AUTOMATIQUES BANCAIRES

(30) Priority: 24.06.2019 US 201962865589 P
(43) Date of publication of application: 27.04.2022
(73) Proprietor: Diebold Nixdorf Incorporated, North Canton, Ohio 44720 (US)
(72) Inventor: MEEK, James, North Canton, Ohio 44720 (US); WITZKE, Scott, Broadview Heights, Ohio 44147 (US); REYNOLDS, Shawn, Canton, Ohio 44721 (US); ZAHOREC, Kenneth W., North Canton, Ohio 44720 (US); KUNC, James, Stow, Ohio 44224 (US)
(74) Representative: Viering, Jentschura & Partner mbB Patent- und Rechtsanwälte
(86) International application number: PCT/US2020/039331
(87) International publication number: WO 2020/263956

(56) References cited:
- US-A1- 2010 258 621
- US-A1- 2017 163 519
- US-A1- 2019 026 973

## Description

### TECHNICAL FIELD

The present disclosure relates generally to servicing automated banking machines, such as an automated banking machine (for example an automated Teller Machine or "ATM") or a point of sale ("POS") machine.

### BACKGROUND

Automated banking machines are used by consumers to conduct banking transactions. A common type of automated banking machine is an automated teller machine ("ATM"). Common banking transactions conducted by users of automated banking machines include deposits and cash withdrawals. Some automated banking machines accept deposits in the form of envelopes, checks, cash, or other items. Automated banking machines may also be used for paying bills, transferring funds between accounts, and making balance inquiries. Automated banking machines and other types of automated banking machines may also be used to dispense media or documents (e.g., tickets, financial checks, coupons, scrip, wagering slips, vouchers, travelers checks, gaming materials, receipts, or other items). Other types of automated banking machines may include devices which count or deliver cash, sheets, documents, or other items of value to a consumer, bank teller, service provider, or other user, as well as point of sale ("POS") terminals and other terminals which enable users to carry out transactions of value. Automated banking machines are useful for carrying out transactions that include transfer of value.

US 2019/026973 A1 describes methods for kiosk locating and directing. A kiosk system may detect an out of service or need of service condition. The terminal management system may then identify a location of the notifying terminal and identify a technician that can service the terminal. Identifying the technician may include taking into account a location of a technician in close or closest proximity. In operation, the terminal management system may receive notifications from a terminal of a fault condition, identify technicians in the vicinity of the terminal, determine which of the identified technicians has skills, tools, and supplies that may be needed to service the terminal, and assign a technician to the task.

### SUMMARY OF EXAMPLE EMBODIMENTS

The following presents a simplified overview of the example embodiments in order to provide a basic understanding of some aspects of the example embodiments. This overview is not an extensive overview of the example embodiments. It is intended to neither identify key or critical elements of the example embodiments nor delineate the scope of the appended claims. Its sole purpose is to present some concepts of the example embodiments in a simplified form as a prelude to the more detailed description that is presented later.

The problems of the related art are solved by the present invention in the aspects of a method, an apparatus and a tangible, non-transitory computer-readable medium having the features of the independent claims.

In accordance with an example embodiment, there is disclosed herein a method that employs a data engine for selecting a service technician for a maintenance task. The data engine maintains skill data and a parts inventory for each service technician. A skill (or skill set) and a part for completing the maintenance task are determined. The service technician closest to the location of the maintenance task with the appropriate skill and part is selected to perform the maintenance task.

In accordance with an example embodiment, there is disclosed herein a method for determining whether a second maintenance task should be scheduled when a first maintenance task is scheduled. The method correlates past maintenance tasks. If a correlation is found between the first and second maintenance tasks, the method creates a second maintenance task along with the first maintenance task.

In accordance with an example embodiment, there is disclosed herein a method for determining whether a maintenance task should be scheduled based on trends in sensor readings. Sensor readings are correlated to determine whether the frequency of an operational malfunction is increasing over time allowing for preemptive maintenance of a component.

### BRIEF DESCRIPTION OF THE DRAWINGS

The accompanying drawings incorporated herein and forming a part of the specification illustrate the example embodiments.
FIG. 1 is a block diagram illustrating an example of a system employing a data engine for providing maintenance services to endpoints.
FIG. 2 is a block diagram illustrating an example of a system employing a data engine for providing maintenance services for endpoints where the endpoints are in a separate, secure network.
FIG. 3 is a block diagram illustrating an example of a system where the data engine is used to provide maintenance services for an automated banking machine.
FIG. 4 is a block diagram illustrating an example of a computer system upon which an example embodiment may be implemented.
FIG. 5 is a block diagram illustrating an example of a method for selecting a service technician for servicing an endpoint.
FIG. 6 is a block diagram illustrating an example of a method for correlating maintenance tasks for providing maintenance services.
FIG. 7 is a block diagram illustrating an example of a method for determining whether to perform a preemptive maintenance task.

### DESCRIPTION OF EXAMPLE EMBODIMENTS

This description provides examples not intended to limit the scope of the appended claims. The figures generally indicate the features of the examples, where it is understood and appreciated that like reference numerals are used to refer to like elements. Reference in the specification to "one embodiment" or "an embodiment" or "an example embodiment" means that a particular feature, structure, or characteristic described is included in at least one embodiment described herein and does not imply that the feature, structure, or characteristic is present in all embodiments described herein.

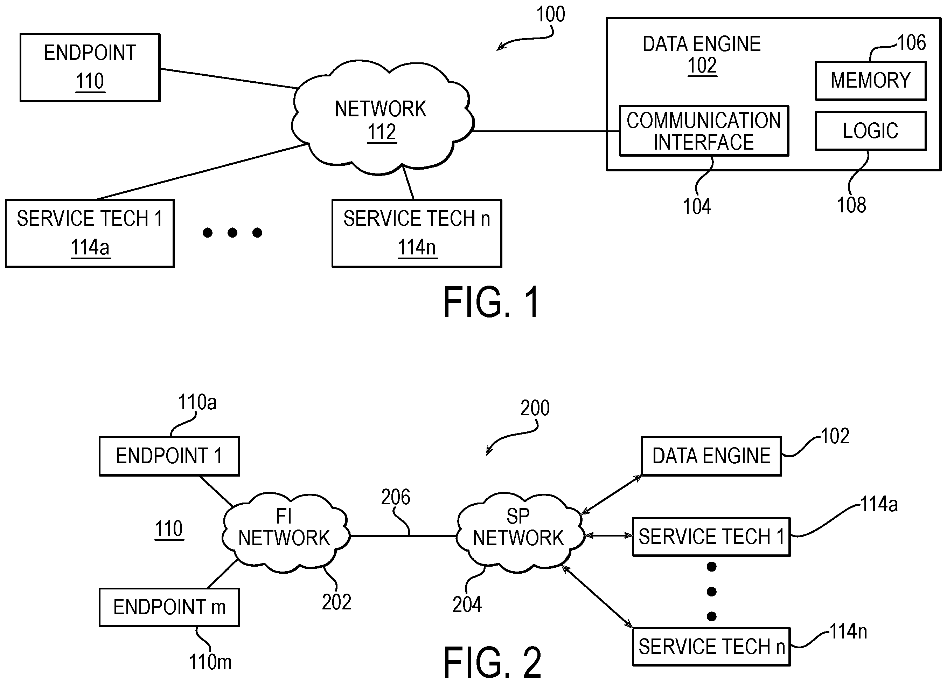

FIG. 1 is a block diagram illustrating an example of a system 100 employing a data engine 102 for providing maintenance services to an endpoint 110. The endpoint 110 and data engine are coupled via a network 112. The network 112 may comprise wired, wireless, or a combination of wired and wireless links. Also coupled to network 112 are mobile devices 114a-n associated with service technicians (e.g., service technician 1 is associated with mobile device 114a and service technician n is associated with mobile device 114n where n is an integer greater than one).

The data engine 102 comprises a communication interface 104, memory 106, and logic 108. The communication interface 104 allows for communication with external devices (such as endpoint 110 and/or mobile devices 114a-n) via network 112. Communication interface 104 may employ suitable wired or wireless protocol. The memory 106 is operable to store data received from the endpoint 110.

The logic 108 is operable to perform the functionality of the data engine 102 described herein. "Logic", as used herein, includes but is not limited to hardware, firmware, software and/or combinations of each to perform a function(s) or an action(s), and/or to cause a function or action from another component. For example, based on a desired application or need, logic may include a software-controlled microprocessor, discrete logic such as an application specific integrated circuit (ASIC), a programmable/programmed logic device, memory device containing instructions, or the like, or combinational logic embodied in hardware. Logic may also be fully embodied as software that performs the desired functionality when executed by a processor.

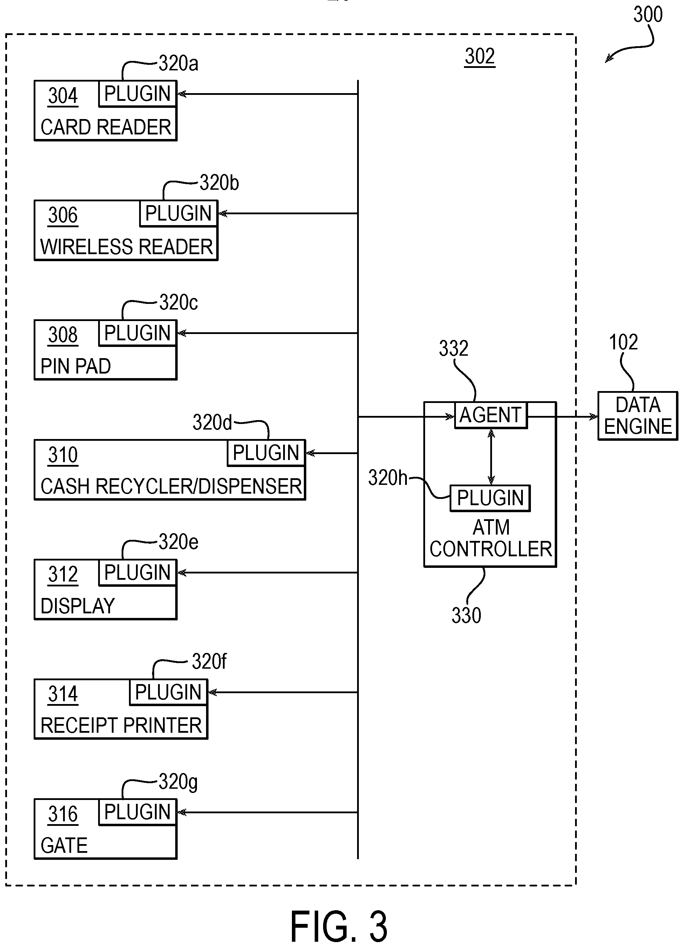

In an example embodiment, the logic 108 is operable to obtain data representative of components (not show, see e.g., FIG. 3) of an endpoint 110, such as for example an automated banking machine or a Point of Sale ("POS") device which is stored in memory 106 via communication interface 104. The logic 108 is further operable to obtain data representative of a status of the components of the endpoint 110 which is stored in memory 106 via communication interface 104. The logic 108 determines a maintenance task to be performed on endpoint 110 based on the data representative of the status of the components of the endpoint 110. the logic 108 is operable to determine a part for completing the maintenance task. For example, for a receipt printer ink or paper. Other examples of parts for completing a maintenance task may include but are not limited to, belts, magnetic read heads, feed wheels, stripper wheels, etc. The logic 108 is operable to determine a skill for completing the maintenance task. The skill may be based on training that the maintenance technician has received, security clearances (e.g., does the security technician have sufficient security clearance to enter a safe within an automated banking machine), or any other type of skill. The logic 108 is operable to obtain a location of a plurality of service technicians (e.g., service technicians 1-n) for endpoint 110.

In an example embodiment, the logic 108 is operable to select a service technician (from the plurality of service technicians 1-n) for handling the maintenance task. The logic 108 causes the selected service technician is notified via the mobile device 114 associated with the selected service technician. For example, a message may be sent via communication interface 104 over network 112 to the selected service technician. The logic selects the service technician based on the part and skill for completing the maintenance task. In an example embodiment, the selected service technician is the service technician having the skill and part for competing the maintenance task who is closes to the endpoint 110.

In an example embodiment, the logic 108 is operable to correlate other maintenance tasks performed in the past within a predefined time period of when the maintenance task has been performed in the past. For example, if in the past, a second type of maintenance task has been performed more than 50% of the time within a week after the first maintenance task has been performed, then the second maintenance task can be performed at the same time the first maintenance task is performed, reducing the number of service calls for the endpoint 110. Thus, based on correlating past maintenance tasks, the logic 108 is operable to determine whether a selected other maintenance task selected from the other maintenance tasks occurred more than a predefined threshold.

In an example embodiment, if the logic 108 determines that a second maintenance task has occurred more than a predefined threshold, the logic 108 determines a second skill for completing the selected other (e.g. second) maintenance task, a second part for completing the selected other maintenance task, and selects a service technician that is nearest to the automated banking machine having the first skill, the second skill, the first part and the second part for completing the first task and the second task.

In an example embodiment, the logic 108 can determine from data representative of past service calls stored in memory 106 whether other maintenance tasks were performed within a predefined time period of when a service technician determined the maintenance task was not needed. This can be an indicator that the wrong maintenance task is being assigned or another part of a component is about to fail. The logic 108 correlates other maintenance tasks performed in the past for the endpoint 110 within a predefined time period of when the maintenance task in the past was determined to be not needed by a maintenance technician. If, based on the correlating of past events the logic 108 determines a selected other maintenance task selected from the other maintenance tasks occurred more than a predefined threshold, the logic 108 is operable to cause a new maintenance task for the selected other maintenance task to be created. The logic is further operable to determine a skill for completing the new maintenance task, a part for completing the new maintenance task, and to select a maintenance technician from a plurality of maintenance technicians based on the determined skill and the part for completing the new task. The selected maintenance technician is a maintenance technician from the plurality of maintenance technicians that is nearest to the endpoint 110 having the skill and the part for completing the task. The logic 108 is operable to cause a message is then sent to the selected service technician via communication interface 104 and network 112.

In an example embodiment, data representative of the status of endpoint 110 is received periodically. The time interval is configurable. In particular embodiments, the data representative of the inventory is received with the data representative of the status, although in other embodiments the data representative of the inventory may be received at different intervals than the data representative of the status. The data representative of the inventory comprises hardware and software data, device capabilities, device configuration and may include, but is not limited to data representative of Application Versions, Basic Input Output System ("BIOS") data, Cassette Table, Certifications, Central Processing Unit ("CPU"), Display Adaptor, Hard Drive, Logical Drives, Memory, Monitor, Network Adapter, Optical Drive, Operating System "OS" Updates, OS Information, Patches, Trusted Platform Module ("TPM"), Universal Serial Bus ("USB Controller"), USB Devices, Device Material Numbers, Device Serial Numbers, Device Construction Levels, and/or Device Firmware Version.

In an example embodiment, the data representative of the status may include device metrics, such as, for example, data from internal registers or measurable parameters. This data can be employed by logic 108 for providing predictive or proactive maintenance of endpoint 110.

In an example embodiment, the data representative of the status comprises a summary of the device - e.g., Hardware/firmware data, configuration of the device - Hardware/firmware data, Inspection data, such as from sensors, motors, actuators and their operation as a transaction occurs for example from cash-in/cash-out shutter open to deposit or present to customer. In some embodiments, the status data may comprise Note/voucher count including type of media, Magnetic Ink Character Recognition ("MICR") read data and its disposition, which cassette notes were deposited or presented back to the customer (money removed), removal of cassettes.

In an example embodiment, the data representative of the status comprises statistics. Statistical data for an automated banking machine may include, but is not limited to the orientation of a check (voucher) that was deposited - Up/MICR to left, up/MICR to right etc., alignment of media as it passes through, offset from center, angle of media etc., Input/output ("I/O") operation including all separation issues that may have not caused a fault but required multiple attempts to separate inserted media, and/or refused, retracted media causes.

For example, the status data indicates that the gate of an automated banking machine has trouble opening or closing, which could be a sign of vandalism or damage. Although no fault (maintenance task) has been generated because the gate is still working, in an example embodiment, the logic 108 creates a maintenance task causing a service technician to inspect/repair the fascia/gate hardware.

As another example, status data can indicate intermittent, excessive note diverts (e.g., picked notes that are diverted instead of being delivered to a customer because of some detected anomaly) which may confuse service technicians who would likely change cassettes which would not solve the problem. Since nothing has failed, ordinarily a maintenance task would not be created, However, the in an example embodiment, logic 108 is operable to create a maintenance task to inspect and/or change the horizontal transport. In particular embodiments, the logic 108 is operable to create a maintenance task and cause a service technician to inspect and/or change the horizontal transport in response to determining that the number of note diverts has increased over a time period.

Still another example, the data representative of the status may indicate that cassette feed components are getting excessive double and mis-pick events. If the cassette travels (e.g., is moved from one banking machine to another), this cassette would likely be moved many times before problems with the cassette are discovered. Because no failure has occurred, ordinarily a maintenance task would not be created. However, in an example embodiment, the logic 108 is operable to create a maintenance task to change the feed components. The logic 108 may also create a maintenance task to change the feed components upon analyzing the status data and determining the frequency of mis-pick events is increasing.

As will be described in more detail herein *infra* (see e.g. FIG. 3), in an example embodiment, the endpoint 110 can employ agents and plugins to collect inventory and status data to be sent to the data engine 102. The agent is a Windows Service that is designed for the collection and transmission of data. Upon startup, the agent directs enabled plugins to collect data. The plugins collect, aggregate, compress, and transmit the collected data to the agent. The agent then goes inactive for a configurable interval before repeating the process. In an example embodiment, the agent is not tied in any way to the device operation, transaction processing, or the application software. If the agent fails, the simple result is that no data will be collected. The operation of the endpoint will not be affected.

The plugins collect inventory and component status data. no transaction (e.g., customer identification or transaction type, amount) data is collected. Any suitable type of plugins may be employed, such as for example JavaScript Object Notation ("JSON") plugins, extensible markup language ("XML") plugins, trace (.trc) file plugins, and/or proprietary plugins, etc.

FIG. 2 is a block diagram illustrating an example of a system 200 employing a data engine 102 for providing maintenance services for endpoints 110a - 110m where the endpoints 110a - 110 m are in a separate, secure network 202 from the service provider network 204. In the illustrated example, the number of endpoints, m, and service technicians, n, can be any physically realizable number, where m and n may or may not be equal. In this illustrated example, a plurality (m) service technicians are available to provide service to a plurality (m) of endpoints.
The endpoints 110a - m are disposed on a Financial Institution ("FI") network 202. Status and inventory data provided by the endpoints 110a - m are sent to the Service Provider ("SP") network 204. In an example embodiment, as indicated by arrow 206 status and inventory data is sent in one direction, and no data is sent to the endpoints 110a - m. Thus, the data engine 102 and the service technicians 114a - n do not have access to data on the FI network 202, except for the status and inventory sent by agents on endpoints 110a - m.

FIG. 3 is a block diagram illustrating an example of a system 300 where the data engine 102 is used to provide maintenance services for an endpoint 110 (FIG. 1) that is an automated banking machine 302. In the illustrated example, the automated banking machine 302 comprises a plurality of components 304-316 having plugins 320a-320g respectively, a controller ("ATM controller") 330 with a plugin 330h and an agent 332. the agent 332 sends data to the data engine 102 but does not receive data from the data engine 102.

In the illustrated example, the components of the automated banking machine are card reader 304, wireless reader 306, Personal Identification Number ("PIN") pad 308, which in particular embodiments may be an encrypting PIN pad ("EPP"), Cash recycler/dispenser 310, display 312, which in particular embodiments can comprise a touch screen or an encrypting touch screen, receipt printer 314, and gate 316. As those skilled in the art can readily appreciate, the components were selected merely for ease of illustration as other embodiments may not include all of the illustrated components and/or have other components not illustrated, such as, for example a check acceptor. In the illustrated example, the cash recycler/dispenser 310 includes the associated cassettes. In the illustrated example, all of the components 304-316 have a plugin, however, in some embodiments, not all components may have a plugin.

The agent 332 is a Windows Service that is designed for the collection and transmission of data. Upon startup, the agent directs enabled plugins 320a-320h to collect data. The plugins 320a-320h collect, aggregate, compress, and transmit the collected data to the agent 332. The agent 332 forwards the data to the data engine 102 and then goes inactive for a configurable interval before repeating the process. In an example embodiment, if an error (or fault) is detected, the agent 332 may request status data from all available plugins 320a - h.

In an example embodiment, the agent is not tied in any way to the device operation, transaction processing, or the application software. If the agent fails, the simple result is that no data will be collected. The operation of the automated banking machine 302 will not be affected. The agent plug-ins collect inventory and component status data. No transaction (e.g., customer identification or transaction type, amount) data is collected. Any suitable type of plugins may be employed, such as for example JavaScript Object Notation ("JSON") plugins, extensible markup language ("XML") plugins, trace (.trc) file plugins, and/or proprietary plugins, etc.

In an example embodiment, the data provided by plugins 320a - h may include, but is not limited to hardware and software data, device capabilities, device configuration and may include, but is not limited to data representative of Application Versions, Basic Input Output System ("BIOS") data, Cassette Table, Certifications, Central Processing Unit ("CPU"), Display Adaptor, Hard Drive, Logical Drives, Memory, Monitor, Network Adapter, Optical Drive, Operating System "OS" Updates, OS Information, Patches, Trusted Platform Module ("TPM"), Universal Serial Bus ("USB Controller"), USB Devices, Device Material Numbers, Device Serial Numbers, Device Construction Levels, and/or Device Firmware Version.

In an example embodiment, the data obtained by plugins 320a - h may include device metrics, such as, for example, data from internal registers or measurable parameters. This data can be employed by logic 108 for providing predictive or proactive maintenance of endpoint 110.

In an example embodiment, the data from plugins 320a - h comprises a summary of the device - e.g., Hardware/firmware data, configuration of the device - Hardware/firmware data, Inspection data, such as from sensors, motors, actuators and their operation as a transaction occurs for example from cash-in/cash-out shutter open to deposit or present to customer. In some embodiments, the status data may comprise Note/voucher count including type of media, Magnetic Ink Character Recognition ("MICR") read data and its disposition, which cassette notes were deposited or presented back to the customer (money removed), removal of cassettes.

In an example embodiment, the data provided by plugins 320a - h comprises statistics. Statistical data for an automated banking machine may include, but is not limited to the orientation of a check (voucher) that was deposited - Up/MICR to left, up/MICR to right etc., alignment of media as it passes through, offset from center, angle of media etc., Input/output ("I/O") operation including all separation issues that may have not caused a fault but required multiple attempts to separate inserted media, and/or refused, retracted media causes.

As those skilled in the art can readily appreciate, the data provided by plugins 320a - h may be different for each plugin. For example, the card reader plugin 320a may provide data regarding how many times a magnetic stripe card could not be read while the cash/recycler plugin 320d provides data regarding mis-picked notes, and the receipt printer plugin 320f provides data about how much paper remains in the receipt printer. For examples of service activities that can be performed on an ATM, see U.S. Patent No. 9,747,590.

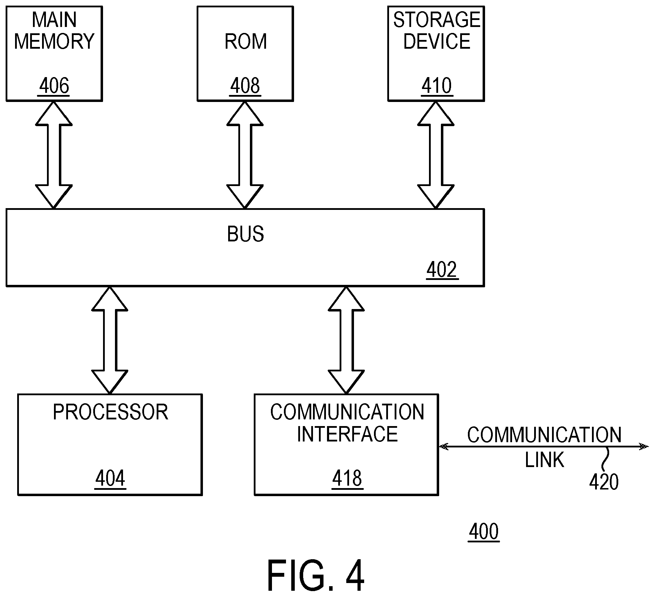

FIG. 4 is a block diagram illustrating an example of a computer system 400 upon which an example embodiment may be implemented. In an example embodiment, computer system 400 is employed for implementing logic 108 of data engine 102 described in FIGS. 1-3.

Computer system 400 includes a bus 402 or other communication mechanism for communicating information and a processor 404 coupled with bus 402 for processing information. Computer system 400 also includes a main memory 406, such as random-access memory (RAM) or other dynamic storage device coupled to bus 402 for storing information and instructions to be executed by processor 404. Main memory 406 also may be used for storing a temporary variable or other intermediate information during execution of instructions to be executed by processor 404. Computer system 400 further includes a read only memory (ROM) 408 or other static storage device coupled to bus 402 for storing static information and instructions for processor 404. A storage device 410, such as a magnetic disk, optical disk, or solid-state disk is provided and coupled to bus 402 for storing information and instructions.

An aspect of the example embodiment is related to the use of computer system 400 for providing service to automated banking machines. According to an example embodiment, providing service to automated banking machines is provided by computer system 400 in response to processor 404 executing one or more sequences of one or more instructions contained in main memory 406. Such instructions may be read into main memory 406 from another computer-readable medium, such as storage device 410. Execution of the sequence of instructions contained in main memory 406 causes processor 404 to perform the process steps described herein. One or more processors in a multi-processing arrangement may also be employed to execute the sequences of instructions contained in main memory 406. In alternative embodiments, hard-wired circuitry may be used in place of or in combination with software instructions to implement an example embodiment. Thus, embodiments described herein are not limited to any specific combination of hardware circuitry and software.

The term "computer-readable medium" as used herein refers to any medium that participates in providing instructions to processor 404 for execution. Such a medium may take many forms, including but not limited to non-volatile media. Common forms of computer-readable media include for example floppy disk, a flexible disk, hard disk, magnetic cards, paper tape, any other physical medium with patterns of holes, a RAM, a PROM, an EPROM, a FLASHPROM, CD, DVD, SSD or any other memory chip or cartridge, or any other medium from which a computer can read.

Various forms of computer-readable media may be involved in carrying one or more sequences of one or more instructions to processor 404 for execution. For example, the instructions may initially be borne on a magnetic disk of a remote computer. The remote computer can load the instructions into its dynamic memory and send the instructions over a telephone line using a modem. A modem local to computer system 400 can receive the data on the telephone line and use an infrared transmitter to convert the data to an infrared signal. An infrared detector coupled to bus 402 can receive the data carried in the infrared signal and place the data on bus 402. Bus 402 carries the data to main memory 406 from which processor 404 retrieves and executes the instructions. The instructions received by main memory 406 may optionally be stored on storage device 410 either before or after execution by processor 404.

Computer system 400 also includes a communication interface 418 coupled to bus 402. Communication interface 418 provides a two-way data communication coupling computer system 400 to a communication (or network) link 420. For example, communication interface 418 may be a local area network (LAN) card to provide a data communication connection to a compatible LAN. As another example, communication interface 418 may be an integrated service digital network (ISDN) card or a modem to provide a data communication connection to a corresponding type of telephone line. Wireless links may also be implemented. In any such implementation, communication interface 418 sends and receives electrical, electromagnetic, or optical signals that carry digital data streams representing various types of information.

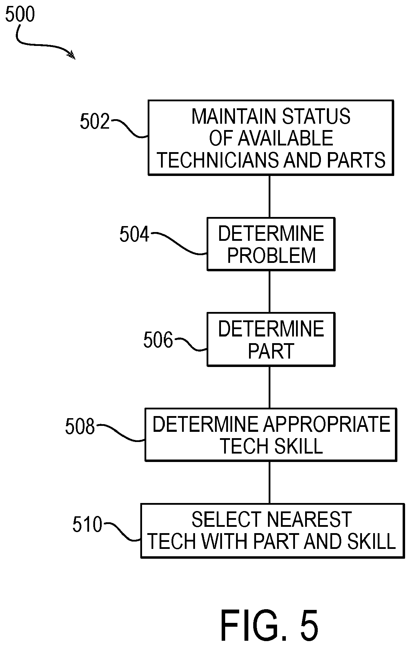

In view of the foregoing structural and functional features described above, methodologies in accordance with example embodiments will be better appreciated with reference to FIGS. 5-7. While, for purposes of simplicity of explanation, the methodologies of FIGS. 5-7 are shown and described as executing serially, it is to be understood and appreciated that the example embodiments are not limited by the illustrated orders, as some aspects could occur in different orders and/or concurrently with other aspects from that shown and described herein. Moreover, not all illustrated features may be required. The methodologies described herein is suitably adapted to be implemented in hardware, software when executed by a processor, or a combination thereof.

FIG. 5 is a block diagram illustrating an example of a method 500 for selecting a service technician for servicing an endpoint, such as an ATM or POS device. The method 500 may be performed by logic 108 (FIG. 1) or processor 404 (FIG. 4).

The skills and parts available are maintained as indicated at 502. The skills data may include which components the service technician is able to service/repair. In particular embodiments, the skills data includes security clearances of the service technicians. For example, for ATMs the data may include which technicians are authorized to enter certain parts of the machine, for instance areas where cash is stored, or memory areas where encryption data is stored.

The parts inventory includes which parts a service technician has on hand. This feature enables a lower inventory of parts to be maintained since every service technician does not need to be provided with every part.

In an example embodiment, the locations of service technicians is obtained. This information can be static (e.g., assigned areas) or dynamic (e.g., current location).

At 504, a problem with the endpoint is discovered. For example, a plugin (such as one of plugins 320a - h in FIG. 3) may provide status data to the data engine 102 (FIGS. 1-3) as described herein indicating a potential or real failure (or fault) of a component. The logic 108 creates a maintenance task for remedying the problem.

At 506, a part for the maintenance task is determined. The part is determined based the status data provided by the plugin. In particular embodiments, if a correlation is found between the current problem and another maintenance task. a part for completing other maintenance task is also determined. For example, a correlation may determine how many rolls of paper can be replaced before the additional ink is to be provided to a receipt printer. For example, for an automated teller machine, the part may be a part for repairing a card reader 302 (e.g., a magnetic read head or belt), a wireless reader (new antenna), a PIN pad (a new key pad), cash recycler/dispenser (belts, gears, wheels, etc.), display (cleaner), and/or gate hardware.

At 508, the appropriate technical skill for a service technician to complete the maintenance task is determined based on the status data provided by the plugin. In an example embodiment, the skill data includes security clearances which can determine whether the service technician can enter the area of the machine where the component is located. In an example embodiment, the skill data for an automated banking machine would contain data indicating whether a service technician can repair a card reader 304, wireless reader 306, PIN pad (and/or EPP) 308, cash recycler and/or dispenser 310, display 312, receipt printer 314, and/or gate/fascia 316.

At 510, a service technician is selected (assigned) to the maintenance task. In an example embodiment, the selected service technician is the technician closest to the endpoint that has the appropriate skill and the part (or parts) for completing the maintenance task. In particular embodiments, e.g., where additional maintenance tasks are involved, the selected service technician is the closest technician who has the skills and parts to complete the maintenance task and the additional maintenance tasks. As those skilled in the art can readily appreciate, a feature of an example embodiment described herein is that not every service technician needs to be trained for every type of repair task and not every service technician needs to have every part on hand. Furthermore, if a service provider has already used a part needed for a maintenance task while completing a previous service task, a different service provider who actually has the part can be sent, reducing delays encountered by having service technicians having to fetch parts they do not have on hand.

In an example embodiment, a message is sent to the selected service technician causing the selected service technician to complete the maintenance task. For example, logic 108 (FIGS. 1-2) can send a message to a device, such as a mobile device, 114 associated with the selected service technician as described herein.

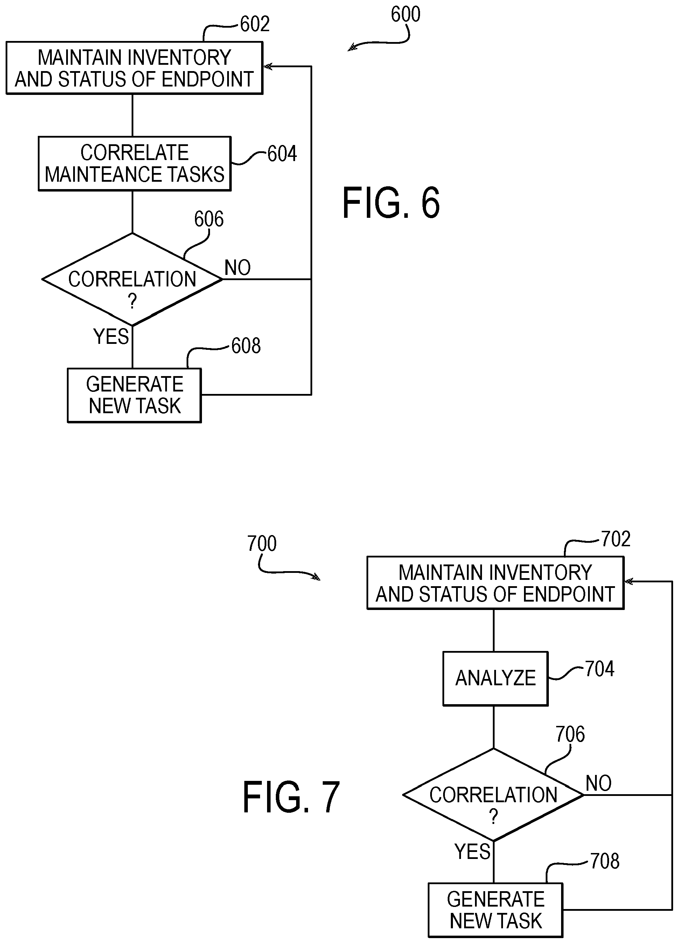

FIG. 6 is a block diagram illustrating an example of a method 600 for correlating maintenance tasks for providing maintenance services. The method 600 may be performed by logic 108 (FIG. 1) or processor 404 (FIG. 4).

At 602, inventory and status data is maintained for components of an endpoint. For example, as described in FIG. 3, *supra,* an agent 332 can periodically send requests for status date from plugins 320. The status data is sent to a data engine 102. The status data can include data representative of previous maintenance tasks performed on components of the endpoint (such as components 304 - 316 in FIG. 3).

At 604, the status data and data representative of previous maintenance tasks is analyzed to determine whether there is a correlation between maintenance tasks. For example, a determination can be made if whenever a certain maintenance task is performed (or in some cases the service technician responds that the maintenance task was not needed), another (or second) maintenance task is performed within a predefined time period. For example, within a week of correcting a paper jam in the receipt printer is another maintenance task to replace the belts in the printer is generated than 40% of the time.

At 606, if a correlation was found (YES), a new maintenance task is created for the second maintenance task. As those skilled in the art can readily appreciate, this can reduce the number of times a service technician has to service an endpoint as well as increasing the amount of time the endpoint is in service because the endpoint is not made unavailable a second time to perform the second maintenance task. After the second maintenance task is created, the method 600 can return to 602 and wait for the next batch of status data to be received before repeating.

If at 606, no correlation was found, the method 600 returns to 602 to wait for additional status data and to repeat the 604, 606, and if needed 608. The method 600 may be repeated as often as desired.

FIG. 7 is a block diagram illustrating an example of a method 700 for determining whether to perform a preemptive maintenance task. The method 700 may be performed by logic 108 (FIG. 1) or processor 404 (FIG. 4).

At 702, inventory and status data is maintained for components of an endpoint. For example, as described in FIG. 3, *supra,* an agent 332 can periodically send requests for status date from plugins 320. The status data is sent to a data engine 102. The status data can include data representative of previous maintenance tasks performed on components of the endpoint (such as components 304 - 316 in FIG. 3).

At 704, the status data and data representative of previous maintenance tasks is analyzed to determine whether there is a correlation between maintenance tasks and current sensor data. For example, if sensors indicate that the gate of an automated banking is having trouble opening or closing, which can be a sign of vandalism or damage, and in particular embodiments if a determination is made that maintenance tasks are frequently generated within a certain time period after similar sensor readings were received, a correlation can be found. Similarly, if excessive (e.g., more than a predefined number) of notes are diverted (not delivered to the customer), a maintenance task can be created. In particular embodiments, a correlation can be found when the sensor readings are compared to determine if (or how long until) maintenance tasks are created when a similar number of diverts occur. Yet another example, a correlation can be found if excessive (more than a predefined number) of mis-picked or double notes are detected, and/or in particular embodiments, if the frequency of mis-picked or double notes is increasing.

At 706, if a correlation was found (YES), a new maintenance task is created. As those skilled in the art can readily appreciate, this can increase the amount of time the endpoint is in service by reducing the amount of unscheduled down time. After the maintenance task is created, the method 700 can return to 702 and wait for the next batch of status data to be received before repeating.

If at 706, no correlation is found, the method 700 returns to 702 to wait for additional status data and repeats 704, 706, and if needed 708. The method 700 may be repeated as often as desired.

Described above are example embodiments. It is, of course, not possible to describe every conceivable combination of components or methodologies, but one of ordinary skill in the art will recognize that many further combinations and permutations of the example embodiments are possible. Accordingly, this application is intended to embrace all such alterations, modifications and variations that fall within the scope of the appended claims interpreted in accordance with the breadth to which they are fairly, legally and equitably entitled.

## Claims

1. A method, comprising:
maintaining for a plurality of maintenance technicians skill data comprising data representative of skills corresponding to maintenance tasks that each of the plurality of maintenance technicians is able to perform and parts available for each of the plurality of maintenance technicians;
obtaining data representative of components of an automated banking machine (302);
obtaining data representative of a status of the components (304-316) of the automated banking machine (302);
determining a first maintenance task to be performed on the automated banking machine (302) based on the data representative of the status of the components (304-316) of the automated banking machine (302);
**characterised by**
correlating, by a processor, other maintenance tasks to determine if there is a selected other second maintenance task that has been performed a number of times within a predefined time period after the first maintenance task has been performed;
determining a first part for completing the first maintenance task and a second part for completing the other second maintenance task;
determining a first skill for completing the first maintenance task and a second skill for completing the other second maintenance task;
determining locations of the plurality of maintenance technicians;
selecting, by the processor, a maintenance technician from the plurality of maintenance technicians based on the selected maintenance technician's skill data indicating the maintenance technician is able to perform the first maintenance task and the other second maintenance task and has the first part for completing the first maintenance task and the second part for completing the other second maintenance task; and
causing, by the processor, a message to be sent to the selected maintenance technician to perform the task;
wherein the selected maintenance technician is a maintenance technician from the plurality of maintenance technicians whose location is nearest to the automated banking machine (302) having the skills and the parts for completing the first maintenance task and the other second maintenance task.

2. The method of claim 1, further comprising:
determining, based on the correlating, whether the selected other second maintenance task selected from the other maintenance tasks occurred more than a predefined threshold.

3. The method set forth in claim 2, further comprising
determining a second skill for completing the selected other second maintenance task; and
determining a second part for completing the selected other second maintenance task;
wherein selecting the maintenance technician is further based on the second skill and the second part; and
wherein the selected maintenance technician is a maintenance technician from the plurality of maintenance technicians that is nearest to the automated banking machine (302) having the first skill, the second skill, the first part and the second part for completing the first task and the second task.

4. The method set forth in claim 1,
correlating other maintenance tasks performed in the past within a predefined time period of when the maintenance task in the past was determined to be not needed by a maintenance technician; and
determining, based on the correlating, whether a selected other maintenance task selected from the other maintenance tasks occurred more than a predefined threshold; and
causing a new maintenance task for the selected other maintenance task to be created responsive to determining the selected other maintenance task occurred more than the predefined threshold, and/or,
determining a skill for completing the new maintenance task;
determining a part for completing the new maintenance task;
selecting, by the processor, a maintenance technician from a plurality of maintenance technicians based on the determined skill and the part for completing the new task; and
causing, by the processor, a message to be sent to the selected maintenance technician to perform the task;
wherein the selected maintenance technician is a maintenance technician from the plurality of maintenance technicians that is nearest to an automated banking machine (302) having the skill and the part for completing the task.

5. The method set forth in claim 1, wherein the data representative of the skills comprises data representative of maintenance tasks that maintenance technicians have been trained to perform and a data representative of a security level indicating whether the maintenance technician is authorized to access an area where the maintenance task is to be performed, and/or,
wherein the data representative of the status of the components (304-316) indicates a problem with a gate opening; and wherein the determined maintenance task is to repair fascia and gate hardware, or,
wherein the data representative of the status indicates intermittent diverts of notes from cassettes to gate above a divert threshold; and wherein the determined maintenance task is to change a horizontal transport that contains a double detect assembly, or,
wherein the data representative of the status indicates cassette feed components are encountering double notes and mis-picked notes; and wherein the determined maintenance task if to change feed components.

6. The method of claim 1, wherein data representative of the status comprises for each cash transaction:
data representative of hardware employed in transaction; data representative of firmware;
data representative of device configuration;
data representative of sensors, motors, actuators, and shutter during the transaction; note count;
type of media; and
magnetic ink character recognition data.

7. An apparatus, comprising:
a data engine (102) that comprises a communication interface operable to receive data from a plurality of endpoints, (110) a controller coupled with the communication interface, and
a memory for storing data representative of a configuration, data representative of a status, and maintenance tasks performed for each of the plurality of endpoints;
the apparatus being **characterised in that**
the controller is operable to correlate other maintenance tasks performed in the past within a predefined time period of after a current maintenance task has been performed in the past;
the controller is operable to determine, based on the correlating, whether a selected other maintenance task selected from the other maintenance tasks occurred more than a predefined threshold;
the controller is operable to cause a second maintenance task for the selected other maintenance task to be created for a selected endpoint responsive to determining the selected other maintenance task occurred more than the predefined threshold and the selected endpoint and the current maintenance task is to be performed on the selected endpoint.

8. The apparatus set forth in claim 7, further comprising:
the controller is operable to correlate other maintenance tasks performed in the past within a predefined time period of when the current maintenance task was determined to be not needed by a maintenance technician;
the controller is operable to determine, based on the correlating, whether a selected other maintenance task selected from the other maintenance tasks occurred more than a predefined threshold; and
the controller is operable to cause a new maintenance task for the selected other maintenance task to be created for a selected endpoint responsive to determining that the selected other maintenance task occurred more than the predefined threshold and the selected endpoint is scheduled to be performed on the selected endpoint.

9. The apparatus set forth in claim 7,
the controller is operable to determine a first part for completing the current maintenance task;
the controller is operable to determine a first skill for completing the current maintenance task;
the controller is operable to determine a second skill for completing the second maintenance task; and
the controller is operable to determine a second part for completing the second maintenance task;
selecting, by a processor, a maintenance technician from a plurality of maintenance technicians based on the determined first skill, second skill, first part, and second part; and
causing, by the processor, a message to be sent to the selected maintenance technician to perform the current and second maintenance tasks;
wherein the selected maintenance technician is a maintenance technician from the plurality of maintenance technicians that is nearest to an automated banking machine (302) having the first skill, the second skill, the first part and the second part for completing the first task and the second task, and/or,
wherein the plurality of endpoints are selected from a group consisting of automated teller machines and point of sale devices.

10. The apparatus set forth in claim 7, further comprising the controller is operable to receive via the communication interface data representative of a current status from each of the plurality of endpoints.

11. The apparatus set forth in claim 10, wherein the controller is operable to receive the data representative of the current status from each of the plurality of endpoints and periodic intervals.

12. The apparatus set forth in claim 7, further comprising:
the controller is operable to correlate data representative of status checks;
the controller is operable to determine that a sensed parameter has changed for a selected endpoint;
the controller is operable to cause a third maintenance task to be created for the third endpoint;
wherein the controller selects a maintenance technician to perform the third maintenance task.

13. The apparatus set forth in claim 12, where the selected maintenance technician is selected based on an ability to perform the first, second, and third maintenance tasks.

14. A tangible, non-transitory computer-readable medium of instructions having instructions encoded thereon for execution by a processor and when executed are operable to perform the method of claim 1.

15. The computer readable medium of claim 14, the instructions are further operable to:
correlate maintenance tasks performed in the past within a predefined time period of after the current maintenance task has been performed in the past for a plurality of automated banking machines;
determine, based on the correlating, whether a selected other maintenance task has occurred within the predefined time period more than a predefined threshold;
cause a second maintenance task for the selected other maintenance task to be created responsive to determining the selected other maintenance task occurred within the predefined time period more than the predefined threshold.

## Patentansprüche

1. Ein Verfahren, umfassend:
Unterhalten, für eine Mehrzahl von Wartungstechnikern, von Fähigkeitsdaten, die Daten umfassen, die Fähigkeiten entsprechend zu Wartungsaufgaben, die jeder der Mehrzahl von Wartungstechniker durchführen kann, und Teile, die für jeden der Mehrzahl von Wartungstechnikern bereitstehen, repräsentieren;
Erhalten von Daten, die Komponenten von einer automatischen Bankmaschine (302) repräsentieren;
Erhalten von Daten, die einen Status der Komponenten (304-316) der automatischen Bankmaschine (302) repräsentieren,
Ermitteln einer ersten Wartungsaufgabe, die an der automatischen Bankmaschine (302) basierend auf den Daten, die den Status der Komponenten (304-316) der automatischen Bankmaschine (302) repräsentieren, durchgeführt werden soll,
**gekennzeichnet durch**
Korrelieren, mittels eines Prozessors, anderer Wartungsaufgaben, um zu ermitteln, ob es eine ausgewählte andere zweite Wartungsaufgabe gibt, die mehrmals innerhalb eines vordefinierten Zeitraums durchgeführt wurde, nachdem die erste Wartungsaufgabe durchgeführt wurde,
Ermitteln eines ersten Teils für die Erledigung der ersten Wartungsaufgabe und eines zweiten Teils für die Erledigung der anderen zweiten Wartungsaufgabe;
Ermitteln einer ersten Fähigkeit für die Erledigung der ersten Wartungsaufgabe und einer zweiten Fähigkeit für die Erledigung der anderen zweiten Wartungsaufgabe;
Ermitteln von Orten der Mehrzahl von Wartungstechnikern;
Auswählen, mittels des Prozessors, eines Wartungstechnikers aus der Mehrzahl von Wartungstechnikern basierend darauf, dass die ausgewählten Wartungstechniker-Fähigkeitsdaten angeben, dass der Wartungstechniker in der Lage ist, die erste Wartungsaufgabe und die andere zweite Wartungsaufgabe durchzuführen und das erste Teil für die Erledigung der ersten Wartungsaufgabe und das zweite Teil für die Erledigung der anderen zweiten Wartungsaufgabe hat; und
Veranlassen, mittels des Prozessors, dass eine Nachricht an den ausgewählten Wartungstechniker gesendet wird, um die Aufgabe durchzuführen;
wobei der ausgewählte Wartungstechniker ein Wartungstechniker aus der Mehrzahl von Wartungstechnikern ist, dessen Ort am nächsten zu der automatischen Bankmaschine (302) ist, über die Fähigkeiten und die Teile für die Erledigung der ersten Wartungsaufgabe und der anderen zweiten Wartungsaufgabe verfügend.

2. Das Verfahren gemäß Anspruch 1, weiter umfassend:
Ermitteln, basierend auf dem Korrelieren, ob die ausgewählte andere zweite Wartungsaufgabe, die aus den anderen Wartungsaufgaben ausgewählt ist, öfter als eine vordefinierte Schwelle aufgetreten ist.

3. Das Verfahren gemäß Anspruch 2, weiter umfassend
Ermitteln einer zweiten Fähigkeit für die Erledigung der anderen zweiten Wartungsaufgabe; und
Ermitteln eines zweiten Teils für die Erledigung der ausgewählten anderen zweiten Wartungsaufgabe,
wobei Auswählen des Wartungstechnikers weiter auf der zweiten Fähigkeit und dem zweiten Teil basiert; und
wobei der ausgewählte Wartungstechniker ein Wartungstechniker aus der Mehrzahl von Wartungstechnikern ist, der am nächsten zu der automatischen Bankmaschine (302) ist, über die erste Fähigkeit, die zweite Fähigkeit, das erste Teil und das zweite Teil für die Erledigung der ersten Aufgabe und der zweiten Aufgabe verfügend.

4. Das Verfahren gemäß Anspruch 1,
Korrelieren anderer Wartungsaufgaben, die in der Vergangenheit innerhalb eines vordefinierten Zeitraums durchgeführt wurden, als die Wartungsaufgabe in der Vergangenheit von einem Wartungstechniker als nicht benötigt ermittelt wurde, und
Ermitteln, basierend auf dem Korrelieren, ob eine ausgewählte andere Wartungsaufgabe, die aus den anderen Wartungsaufgaben, die öfter als eine vordefinierte Schwelle aufgetreten sind, ausgewählt ist, und
Veranlassen der Erzeugung einer neuen Wartungsaufgabe für die ausgewählte andere Wartungsaufgabe in Reaktion auf das Ermitteln, dass die ausgewählte andere Wartungsaufgabe öfter als die vordefinierte Schwelle aufgetreten ist, und/oder
Ermitteln einer Fähigkeit für die Erledigung der neuen Wartungsaufgabe;
Ermitteln eines Teils für die Erledigung der neuen Wartungsaufgabe;
Auswählen, mittels des Prozessors, eines Wartungstechnikers aus einer Mehrzahl von Wartungstechnikern basierend auf der ermittelten Fähigkeit und dem Teil für die Erledigung der neuen Aufgabe; und
Veranlassen, mittels des Prozessors, des Sendens einer Nachricht an den ausgewählten Wartungstechniker, um die Aufgabe durchzuführen;
wobei der ausgewählte Wartungstechniker ein Wartungstechniker aus der Mehrzahl von Wartungstechnikern ist, der am nächsten zu einer automatischen Bankmaschine (302) ist, über die Fähigkeit und das Teil für die Erledigung der Aufgabe verfügend.

5. Das Verfahren gemäß Anspruch 1, wobei die die Fähigkeiten repräsentierenden Daten Daten, die Wartungsaufgaben repräsentieren, zu deren Durchführung Wartungstechniker trainiert wurden, und Daten, die eine Sicherheitsstufe repräsentieren, die angibt, ob der Wartungstechniker autorisiert ist, Zugang zu einem Gebiet, in dem die Wartungsaufgabe durchgeführt werden soll, zu haben, umfassen, und/oder,
wobei die Daten, die den Status der Komponenten (304-316) repräsentieren, ein Problem mit einer Zugangsöffnung angeben, und wobei die ermittelte Wartungsaufgabe die Reparatur von Armaturen- und Zugangshardware ist, oder,
wobei die Daten, die den Status repräsentieren, zeitweise Umleitungen von Banknoten aus Kassetten zu dem Zugang oberhalb einer Umleitungsschwelle angeben, und wobei die ermittelte Wartungsaufgabe einen horizontalen Transport, der eine Doppelerkennungsanordnung enthält, ändern soll, oder
wobei die Daten, die den Status repräsentieren, angeben, dass Kassettenführungskomponenten auf doppelte Banknoten und fehlgewählte Banknoten stoßen; und wobei die ermittelte Wartungsaufgabe Führungskomponenten ändern soll.

6. Das Verfahren gemäß Anspruch 1, wobei Daten, die den Status repräsentieren, für jede Bargeld-Transaktion umfassen:
Daten, die in Transaktion verwendete Hardware repräsentieren; Daten, die Firmware repräsentieren;
Daten, die Vorrichtungskonfiguration repräsentieren;
Daten, die Sensoren, Antriebe, Aktoren und einen Verschluss während der Transkation repräsentieren;
Banknotenanzahl;
Art der Medien; und
Magnettintenzeichenerkennungsdaten.

7. Eine Vorrichtung, umfassend:
eine Datenmaschine (102), die eine Kommunikationsschnittstelle umfasst, die funktionsfähig ist, Daten von einer Mehrzahl von Endpunkten (110) zu empfangen,
eine Steuerung, die mit der Kommunikationsschnittstelle gekoppelt ist, und
einen Speicher zum Speichern von Daten, die eine Konfiguration repräsentieren, Daten, die einen Status repräsentieren, und Wartungsaufgaben für jeden der Mehrzahl von Endpunkten;
wobei die Vorrichtung **dadurch gekennzeichnet ist, dass**
die Steuerung funktionsfähig ist, andere Wartungsaufgaben, die in der Vergangenheit innerhalb eines vordefinierten Zeitraums nach dem Durchführen einer aktuellen Wartungsaufgabe in der Vergangenheit durchgeführt wurden, zu korrelieren;
die Steuerung funktionsfähig ist, zu ermitteln, basierend auf dem Korrelieren, ob eine ausgewählte andere Wartungsaufgabe, die aus den anderen Wartungsaufgaben ausgewählt ist, öfter als eine vordefinierte Schwelle aufgetreten ist,
die Steuerung funktionsfähig ist, zu veranlassen, eine zweite Wartungsaufgabe für die ausgewählte andere Wartungsaufgabe für einen ausgewählten Endpunkt zu erzeugen in Reaktion auf das Ermitteln, dass die ausgewählte andere Wartungsaufgabe öfter als die vordefinierte Schwelle aufgetreten ist und der ausgewählte Endpunkt und die aktuelle Wartungsaufgabe vorgesehen ist, auf dem ausgewählten Endpunkt ausgeführt zu werden.

8. Die Vorrichtung gemäß Anspruch 7, weiter umfassend, dass:
die Steuerung funktionsfähig ist, andere Wartungsaufgaben, die in der Vergangenheit innerhalb eines vordefinierten Zeitraums durchgeführt wurden, als die aktuelle Wartungsaufgabe von einem Wartungstechniker als nicht benötigt ermittelt wurde, zu korrelieren; und
die Steuerung funktionsfähig ist, zu ermitteln, basierend auf dem Korrelieren, ob eine ausgewählte andere Wartungsaufgabe, die aus den anderen Wartungsaufgaben ausgewählt ist, öfter als eine vordefinierte Schwelle aufgetreten ist, und
die Steuerung funktionsfähig ist, die Erzeugung einer neuen Wartungsaufgabe für die ausgewählte andere Wartungsaufgabe für einen ausgewählten Endpunkt zu veranlassen in Reaktion auf das Ermitteln, dass die ausgewählte andere Wartungsaufgabe öfter als die vordefinierte Schwelle aufgetreten ist und der ausgewählte Endpunkt vorgesehen ist, auf dem ausgewählten Endpunkt ausgeführt zu werden.

9. Die Vorrichtung gemäß Anspruch 7, wobei
die Steuerung funktionsfähig ist, ein erstes Teil für die Erledigung der aktuellen Wartungsaufgabe zu ermitteln;
die Steuerung funktionsfähig ist, eine erste Fähigkeit für die Erledigung der aktuellen Wartungsaufgabe zu ermitteln;
die Steuerung funktionsfähig ist, eine zweite Fähigkeit für die Erledigung der zweiten Wartungsaufgabe zu ermitteln; und
die Steuerung funktionsfähig ist, ein zweites Teil für die Erledigung der zweiten Wartungsaufgabe zu ermitteln;
Auswählen, mittels eines Prozessors, eines Wartungstechnikers aus einer Mehrzahl von Wartungstechnikern basierend auf der ersten Fähigkeit, der zweiten Fähigkeit, des ersten Teils und des zweiten Teils; und
Veranlassen, mittels des Prozessors, des Sendens einer Nachricht an den ausgewählten Wartungstechniker, um die aktuelle und die zweite Wartungsaufgabe durchzuführen;
wobei der ausgewählte Wartungstechniker ein Wartungstechniker aus der Mehrzahl von Wartungstechnikern ist, der am nächsten zu einer automatischen Bankmaschine (302) ist, über die erste Fähigkeit, die zweite Fähigkeit, das erste Teil und das zweite Teil für die Erledigung der ersten Aufgabe und der zweiten Aufgabe verfügend, und/oder
wobei die Mehrzahl von Endpunkten aus einer Gruppe, die aus Geldausgabeautomaten und Verkaufsstellenvorrichtungen besteht, ausgewählt sind.

10. Die Vorrichtung gemäß Anspruch 7, weiter umfassend, dass die Steuerung funktionsfähig ist, über die Kommunikationsschnittstelle Daten, die repräsentativ für einen aktuellen Status von jedem der Mehrzahl von Endpunkten sind, zu empfangen.

11. Die Vorrichtung gemäß Anspruch 10, wobei die Steuerung funktionsfähig ist, die Daten, die repräsentativ für den aktuellen Status von jedem der Mehrzahl von Endpunkten und periodischen Zeitspannen sind, zu empfangen.

12. Die Vorrichtung gemäß Anspruch 7, weiter umfassend, dass:
die Steuerung funktionsfähig ist, Daten, die repräsentativ für Statusprüfungen sind, zu korrelieren;
die Steuerung funktionsfähig ist, zu ermitteln, dass ein erkannter Parameter für einen ausgewählten Endpunkt sich geändert hat;
die Steuerung funktionsfähig ist, die Erzeugung einer dritte Wartungsaufgabe für den dritten Endpunkt zu veranlassen,
wobei die Steuerung einen Wartungstechniker auswählt, um die dritte Wartungsaufgabe durchzuführen.

13. Die Vorrichtung gemäß Anspruch 12, wobei der ausgewählte Wartungstechniker basierend auf einer Fähigkeit, die erste, zweite und dritte Wartungsaufgabe durchzuführen, ausgewählt ist.

14. Ein physisches, nichtflüchtiges computerlesbares Medium von Instruktionen, das Instruktionen aufweist, die darauf zur Ausführung mittels eines Prozessors kodiert und, wenn ausgeführt, funktionsfähig sind, das Verfahren gemäß Anspruch 1 durchzuführen.

15. Das computerlesbare Medium gemäß Anspruch 14, wobei die Instruktionen weiter funktionsfähig sind zum:
Korrelieren von Wartungsaufgaben, die in der Vergangenheit innerhalb eines vordefinierten Zeitraums nach dem Durchführen der aktuellen Wartungsaufgabe in der Vergangenheit für eine Mehrzahl von automatischen Bankmaschinen durchgeführt wurden,
Ermitteln, basierend auf dem Korrelieren, ob eine ausgewählte andere Wartungsaufgabe innerhalb des vordefinierten Zeitraums öfter als eine vordefinierte Schwelle aufgetreten ist,
Veranlassen der Erzeugung einer zweiten Wartungsaufgabe für die ausgewählte andere Wartungsaufgabe in Reaktion auf das Ermitteln, dass die ausgewählte andere Wartungsaufgabe innerhalb des vordefinierten Zeitraums öfter als die vordefinierte Schwelle aufgetreten ist.

## Revendications

1. Procédé comprenant :
le maintien, pour une pluralité de techniciens de maintenance, de données de compétences consistant en des données représentatives de compétences correspondant à des tâches de maintenance que chacun de la pluralité de techniciens de maintenance est capable d'exécuter et à des pièces disponibles pour chacun de la pluralité de techniciens de maintenance ;
l'obtention de données représentatives de composants d'un guichet automatique bancaire (302) ;
l'obtention de données représentatives d'un état des composants (304-316) de ce guichet automatique bancaire (302) ;
la détermination d'une première tâche de maintenance à exécuter sur le guichet automatique bancaire (302) en se basant sur les données représentatives de l'état des composants (304-316) du guichet automatique bancaire (302) ;
**caractérisé par**
la corrélation, par un processeur, d'autres tâches de maintenance afin de déterminer s'il y a une autre deuxième tâche de maintenance sélectionnée qui a été exécutée un certain nombre de fois pendant une période de temps prédéfinie après que la première tâche de maintenance a été accomplie ;
la détermination d'une première pièce pour accomplir la première tâche de maintenance et d'une deuxième pièce pour accomplir l'autre deuxième tâche de maintenance ;
la détermination d'une première compétence pour accomplir la première tâche de maintenance et d'une deuxième compétence pour accomplir l'autre deuxième tâche de maintenance ;
la détermination des emplacements de la pluralité de techniciens de maintenance ;
la sélection, par le processeur, d'un technicien de maintenance parmi la pluralité de techniciens de maintenance en se basant sur les données de compétences du technicien de maintenance sélectionné indiquant que ce technicien de maintenance est capable d'exécuter la première tâche de maintenance et l'autre deuxième tâche de maintenance et a la première pièce pour accomplir la première tâche de maintenance et la deuxième pièce pour accomplir l'autre deuxième tâche de maintenance ; et
la commande, par le processeur, d'envoyer un message au technicien de maintenance sélectionné pour exécuter la tâche ;
le technicien de maintenance sélectionné étant un technicien de maintenance parmi la pluralité de techniciens de maintenance dont l'emplacement est le plus proche du guichet automatique bancaire (302) ayant les compétences et les pièces pour accomplir l'autre première tâche de maintenance et l'autre deuxième tâche de maintenance.

2. Procédé selon la revendication 1, comprenant en outre :
la détermination, en se basant sur la corrélation, de si l'autre deuxième tâche de maintenance sélectionnée, sélectionnée parmi les autres tâches de maintenance, s'est produite ou pas plus de fois qu'un seuil prédéfini.

3. Procédé selon la revendication 2, comprenant en outre :
la détermination d'une deuxième compétence pour accomplir l'autre deuxième tâche de maintenance sélectionnée ; et
la détermination d'une deuxième pièce pour accomplir l'autre deuxième tâche de maintenance sélectionnée ;
la sélection du technicien de maintenance étant basée en outre sur la deuxième compétence et sur la deuxième pièce ; et
le technicien de maintenance sélectionné étant un technicien de maintenance parmi la pluralité de techniciens de maintenance qui est le plus proche du guichet automatique bancaire (302) ayant la première compétence, la deuxième compétence, la première pièce et la deuxième pièce pour accomplir la première tâche et la deuxième tâche.

4. Procédé selon la revendication 1,
la corrélation d'autres tâches de maintenance exécutées par le passé pendant une période de temps prédéterminée pendant laquelle un technicien de maintenance a déterminé que la tâche de maintenance par le passé n'était pas nécessaire ; et
la détermination, en se basant sur cette corrélation, de si une autre tâche de maintenance sélectionnée, sélectionnée parmi les autres tâches de maintenance, s'est produite ou pas plus de fois qu'un seuil prédéfini ; et
la commande de la création d'une nouvelle tâche de maintenance pour l'autre tâche de maintenance sélectionnée en réponse à la détermination que l'autre tâche de maintenance sélectionnée s'est produite plus de fois que le seuil prédéfini ; et/ou
la détermination d'une compétence pour accomplir la nouvelle tâche de maintenance ;
la détermination d'une pièce pour accomplir la nouvelle tâche de maintenance ;
la sélection, par le processeur, d'un technicien de maintenance parmi une pluralité de techniciens de maintenance en se basant sur la compétence déterminée et sur la pièce pour accomplir la nouvelle tâche ; et
la commande, par le processeur, d'envoyer un message au technicien de maintenance sélectionné pour exécuter la tâche ;
le technicien de maintenance sélectionné étant un technicien de maintenance parmi la pluralité de techniciens de maintenance qui est la plus proche d'un guichet automatique bancaire (302) ayant la compétence et la pièce pour accomplir la tâche.

5. Procédé selon la revendication 1,
dans lequel les données représentatives des compétences consistent en des données représentatives des tâches de maintenance que des techniciens de maintenance ont été formés à exécuter et en une donnée représentative d'un niveau de sécurité indiquant si le technicien de maintenance est autorisé ou pas à accéder à un endroit où la tâche de maintenance doit être exécutée, et/ou
dans lequel les données représentatives de l'état des composants (304-316) indiquent un problème avec une ouverture de porte ; et dans lequel la tâche de maintenance déterminée est de réparer la façade et le matériel de porte, ou
dans lequel les données représentatives de l'état indiquent des détournements intermittents de billets des cassettes à la porte plus fréquents qu'un seuil de détournements ; et dans lequel la tâche de maintenance déterminée est de changer un transport horizontal qui contient un ensemble de détection double, ou
dans lequel les données représentatives de l'état indiquent que des composants d'alimentation des cassettes rencontrent des billets doubles ou des billets mal recueillis ; et dans lequel la tâche de maintenance déterminée est de changer les composants d'alimentation.

6. Procédé selon la revendication 1, dans lequel les données représentatives de l'état comprennent pour chaque transaction en espèces :
des données représentatives du matériel utilisé dans la transaction ;
des données représentatives d'un micrologiciel ;
des données représentatives d'une configuration de dispositif ;
des données représentatives de capteurs, de moteurs, d'actionneurs, et de volets pendant la transaction ;
le compte de billets ;
le type de média ; et
des données de reconnaissance de caractères en encre magnétique.

7. Appareil comprenant :
un moteur de données (102) qui comporte une interface de communication pouvant être utilisée pour recevoir des données en provenance de :
une pluralité de points terminaux (110),
un contrôleur couplé à l'interface de communication, et
une mémoire pour stocker des données représentatives d'une configuration, des données représentatives d'un état, et des tâches de maintenance exécutées pour chacun de la pluralité de points terminaux ;
cet appareil étant **caractérisé en ce que** :
le contrôleur peut être utilisé pour corréler d'autres tâches de maintenance exécutées par le passé pendant une période de temps prédéfinie après qu'une tâche de maintenance courante a été exécutée par le passé ;
le contrôleur peut être utilisé pour déterminer, en se basant sur cette corrélation, si une autre tâche de maintenance sélectionnée, sélectionnée parmi les autres tâches de maintenance, s'est produite ou pas plus de fois qu'un seuil prédéfini ;
le contrôleur peut être utilisé pour commander la création d'une deuxième tâche de maintenance pour l'autre tâche de maintenance sélectionnée pour un point terminal sélectionné en réponse à la détermination que l'autre tâche de maintenance sélectionnée s'est produite plus de fois que le seuil prédéfini et que le point terminal sélectionné et la tâche de maintenance courante doit être exécutée sur le point terminal sélectionné.

8. Appareil selon la revendication 7, comprenant en outre :
le contrôleur pouvant être utilisé pour corréler d'autres tâches de maintenance exécutées par le passé pendant une période de temps prédéfinie pendant laquelle un technicien de maintenance a déterminé que la tâche de maintenance courante n'était pas nécessaire ;
le contrôleur pouvant être utilisé pour déterminer, en se basant sur cette corrélation, si une autre tâche de maintenance sélectionnée, sélectionnée parmi les autres tâches de maintenance, s'est produite ou pas plus de fois qu'un seuil prédéfini ; et
le contrôleur pouvant être utilisé pour commander la création d'une nouvelle tâche de maintenance pour l'autre tâche de maintenance sélectionnée pour un point terminal sélectionné en réponse à la détermination que l'autre tâche de maintenance sélectionnée s'est produite plus de fois que le seuil prédéfini et que le point terminal sélectionné est programmé pour être exécuté sur le point terminal sélectionné.

9. Appareil selon la revendication 7, dans lequel
le contrôleur peut être utilisé pour déterminer une première pièce pour accomplir la tâche de maintenance courante ;
le contrôleur peut être utilisé pour déterminer une première compétence pour accomplir la tâche de maintenance courante ;
le contrôleur peut être utilisé pour déterminer une deuxième compétence pour accomplir la deuxième tâche de maintenance ; et
le contrôleur peut être utilisé pour déterminer une deuxième pièce pour accomplir la deuxième tâche de maintenance ;
la sélection, par un processeur, d'un technicien de maintenance parmi une pluralité de techniciens de maintenance en se basant sur la première compétence, sur la deuxième compétence, sur la première pièce et sur la deuxième pièce déterminées ; et
la commande, par le processeur, d'envoyer un message au technicien de maintenance sélectionné pour exécuter la tâche de maintenance courante et la deuxième tâche de maintenance ;
le technicien de maintenance sélectionné étant un technicien de maintenance, parmi la pluralité de techniciens de maintenance, qui est le plus proche d'un guichet automatique bancaire (302) ayant la première compétence, la deuxième compétence, la première pièce et la deuxième pièce pour accomplir la première tâche et la deuxième tâche, et/ou
la pluralité de points terminaux étant sélectionnés parmi un groupe consistant en des distributeurs automatiques de billets et des terminaux de point de vente.

10. Appareil selon la revendication 7, comprenant en outre que le contrôleur peut être utilisé pour recevoir, via l'interface de communication, des données représentatives d'un état courant en provenance de la pluralité de points terminaux.

11. Appareil selon la revendication 10, dans lequel le contrôleur peut être utilisé pour recevoir les données représentatives de l'état courant en provenance de chacun de la pluralité de points terminaux et à des intervalles périodiques.

12. Appareil selon la revendication 7, comprenant en outre :
le contrôleur pouvant être utilisé pour corréler des données représentatives de vérifications d'état ;
le contrôleur pouvant être utilisé pour déterminer qu'un paramètre détecté a changé pour un point terminal sélectionné ;
le contrôleur pouvant être utilisé pour commander la création d'une troisième tâche de maintenance pour le troisième point terminal ;
le contrôleur sélectionnant un technicien de maintenance pour exécuter cette troisième tâche de maintenance.

13. Appareil selon la revendication 12, dans lequel le technicien de maintenance sélectionné est sélectionné en se basant sur une capacité d'exécuter la première, la deuxième et la troisième tâche de maintenance.

14. Support d'instructions tangible, non transitoire lisible par ordinateur ayant des instructions codées sur lui pour être exécutées par un processeur, et lorsqu'elles sont exécutées, elles peuvent être utilisées pour exécuter le procédé selon la revendication 1.

15. Support lisible par ordinateur selon la revendication 14, dont les instructions peuvent être utilisées en outre pour :
corréler des tâches de maintenance exécutées par le passé pendant une période de temps prédéfinie après qu'une tâche de maintenance courante a été exécutée par le passé pour une pluralité de guichets automatiques bancaires ;
déterminer, en se basant sur cette corrélation, si une autre tâche de maintenance sélectionnée s'est produite ou pas pendant la période de temps prédéfinie plus de fois qu'un seuil prédéfini ;
commander la création d'une deuxième tâche de maintenance pour l'autre tâche de maintenance sélectionnée en réponse à la détermination que l'autre tâche de maintenance sélectionnée s'est produite pendant la période de temps prédéfinie plus de fois que le seuil prédéfini.
